(19) Europäisches Patentamt
European Patent Office
Office européen des brevets

(11) **EP 1 835 263 B1**

(12) **FASCICULE DE BREVET EUROPEEN**

(45) Date de publication et mention
de la délivrance du brevet:
**30.06.2010 Bulletin 2010/26**

(51) Int Cl.:
***G01D 5/24*** (2006.01)

(21) Numéro de dépôt: **06111196.9**

(22) Date de dépôt: **15.03.2006**

(54) **Circuit électronique d'interface d'un capteur capacitif pour la mesure d'un paramètre physique, et procédé de mise en action du circuit électronique**

Elektronischer Schnittstellenschaltkreis eines kapazitiven Sensors zur Messung eines physikalischen Parameters und Verfahren zur Ingangsetzung des elektronischen Schaltkreises

Electronic interface circuit of a capacitive sensor for measuring a physical parameter, and method of activation of the electronic circuit

(84) Etats contractants désignés:
**CH DE FR LI**

(43) Date de publication de la demande:
**19.09.2007 Bulletin 2007/38**

(73) Titulaire: **EM Microelectronic-Marin SA**
**2074 Marin (CH)**

(72) Inventeurs:
• **Grosjean, Sylvain**
**25500, Les Fins (FR)**

• **Willemin, Michel**
**2515, Prêles (CH)**

(74) Mandataire: **Ravenel, Thierry Gérard Louis et al**
**ICB**
**Ingénieurs Conseils en Brevets SA**
**Faubourg de l'Hôpital 3**
**2001 Neuchâtel (CH)**

(56) Documents cités:
**FR-A- 2 720 510    US-A- 5 977 803**

# EP 1 835 263 B1

**Description**

L'invention concerne un circuit électronique d'interface d'un capteur capacitif pour la mesure d'un paramètre physique, tel qu'une accélération, une vitesse angulaire, une force ou une pression. Le capteur capacitif est composé de deux condensateurs montés en différentiel dont une électrode commune est susceptible de se déplacer entre deux électrodes fixes sous l'action par exemple d'une force afin de modifier la valeur capacitive de chaque condensateur.

L'invention concerne également un procédé de mise en action du circuit électronique.

Habituellement dans de tels capteurs capacitifs pour la mesure d'un paramètre physique, l'électrode commune mobile fait partie d'une armature maintenue élastiquement entre les deux électrodes fixes. Cette électrode commune est susceptible de se déplacer d'une certaine distance en direction de l'une ou l'autre des électrodes fixes sous l'action d'une force par exemple. Au repos, l'électrode commune se trouve approximativement à égale distance de l'une et de l'autre électrode fixe, ce qui définit des valeurs capacitives égales des deux condensateurs. Lorsque l'électrode commune se déplace sous l'action par exemple d'une force, la valeur capacitive de chaque condensateur varie inversement. Le circuit électronique d'interface d'un capteur capacitif est donc destiné à fournir un signal de sortie sous la forme d'une tension dépendant de la variation des capacités des deux condensateurs.

Dans un cas idéal, la tension de sortie varie de manière linéaire par rapport au déplacement de l'électrode commune mobile. Toutefois comme le circuit électronique est réalisé sous forme d'un circuit intégré dans un substrat semi-conducteur, il doit être tenu compte des capacités parasites, qui s'ajoutent aux capacités des condensateurs. Ces capacités parasites ne dépendent pratiquement pas du déplacement de l'électrode commune, ce qui crée des non-linéarités. De ce fait, la tension de sortie du circuit électronique ne varie pas linéairement par rapport au déplacement de l'électrode commune mobile. Ces capacités parasites ont également pour effet de faire baisser la sensibilité ou le gain du circuit électronique.

Comme le capteur du type MEMS est intégré également dans un substrat semi-conducteur, tel qu'un substrat en Silicium, il survient également un problème de non-linéarité lié au potentiel du substrat lors du fonctionnement du capteur. Ce potentiel de substrat est difficile à contrôler sur toute la structure dudit capteur, car le substrat n'est jamais totalement conducteur. Du fait de cette non-linéarité, la force électrostatique mesurée n'est pas nulle dans un mode de repos du capteur et du circuit électronique. De par l'influence du potentiel du substrat sur la force électrostatique, cela conduit à une variation de la force réelle mesurée, qui est appliquée sur l'électrode commune mobile, ce qui est un inconvénient.

Pour effectuer généralement une mesure d'une force, d'une accélération ou d'une pression, les électrodes fixes des deux condensateurs sont polarisées ou excitées cycliquement par des tensions de polarité opposée par rapport à une tension de référence au repos. En polarisant les deux électrodes fixes à des niveaux de tension différents, la différence de charges sur l'électrode mobile peut être mesurée et convertie en une tension en sortie du circuit électronique. Lorsque la tension de sortie est stabilisée à sa valeur finale, la charge totale sur l'électrode mobile devient nulle. Cette tension de sortie peut être fournie échantillonnée à un circuit de traitement susceptible de fournir des données d'accélération, de force, de pression ou également de vitesse angulaire selon la structure du capteur.

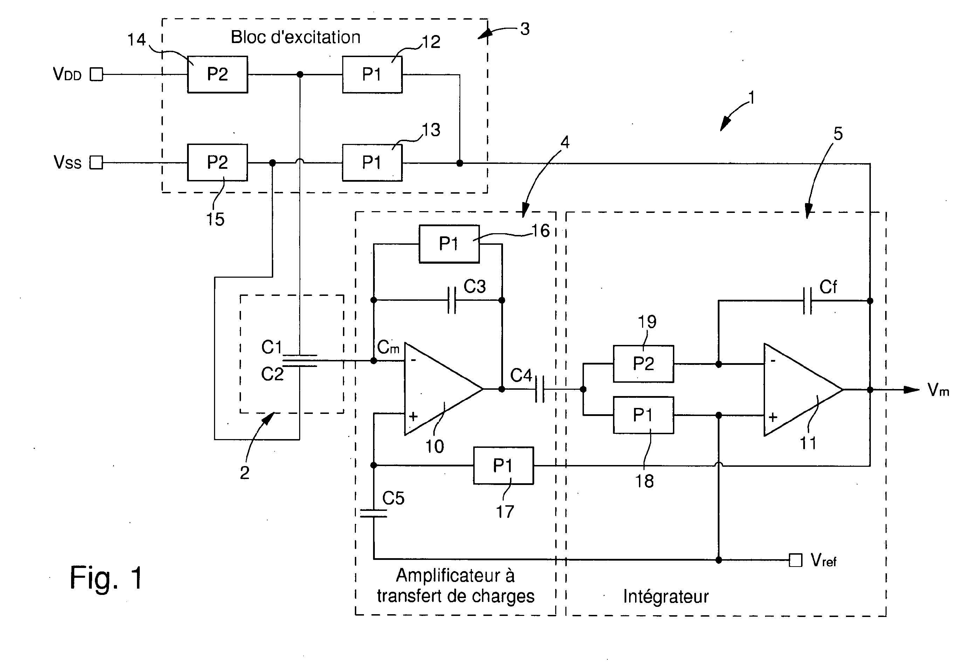

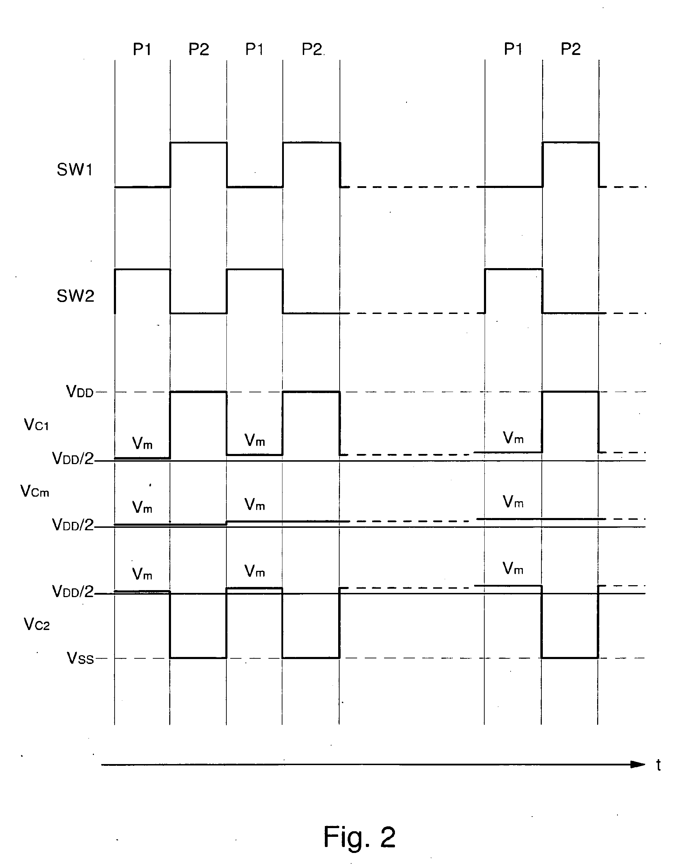

Un circuit électronique d'interface d'un capteur capacitif de l'art antérieur est représenté à la figure 1, ainsi que sa mise en action illustrée par un diagramme temporel de différents signaux de tension à la figure 2. Le circuit électronique représenté se base sur un circuit électronique décrit dans l'article rédigé par MM. H. Leutold et F. Rudolph, qui est paru dans la revue intitulée "Sensors and actuators" A21-A23 (1990), pages 278 à 281, et également par le brevet FR 2 720 510.

Le circuit électronique 1 représenté est une interface d'un capteur capacitif 2, qui comprend deux condensateurs montés en différentiel ayant une électrode commune Cm susceptible de se déplacer entre deux électrodes fixes pour définir deux capacités C1 et C2. Le circuit électronique 1 comprend un bloc amplificateur à transfert de charges 4, qui est relié en entrée à l'électrode commune Cm, un bloc intégrateur 5 pour fournir en permanence en sortie une tension Vm égale à l'intégrale des charges fournies par le bloc amplificateur 4, et un bloc d'excitation 3 pour cycliquement polariser les électrodes fixes à des niveaux de tension déterminés.

Le bloc d'excitation 3 comprend quatre interrupteurs 12, 13, 14 et 15, qui peuvent être formés par des transistors MOS de commutation dans le circuit intégré. Le premier interrupteur 12 est disposé entre la sortie de l'intégrateur 5 et l'électrode fixe de la capacité C1. Le second interrupteur 13 est disposé entre la sortie de l'intégrateur et l'électrode fixe de la capacité C2. Le troisième interrupteur 14 est disposé entre la borne de tension haute $V_{DD}$ d'une source de tension et l'électrode fixe de la capacité C1. Finalement, le quatrième interrupteur 15 est disposé entre la borne de tension basse $V_{SS}$ de la source de tension et l'électrode fixe de la capacité C2.

Dans un mode de fonctionnement du circuit électronique, chaque cycle ou période de mesure successif est divisé en deux phases P1 et P2 comme montré à la figure 2. Le passage d'une phase à l'autre est commandé par des signaux d'horloge non représentés de manière à respectivement ouvrir ou fermer les interrupteurs. Les interrupteurs 12 et 13 sont fermés par des signaux SW2 à l'état "1" dans la première phase notée P1 aux figures 1 et 2, alors que les interrupteurs 14 et 15 sont ouverts dans cette première phase P1. Dans cette première phase P1, la tension Vm présente en sortie de l'intégrateur est appliquée à chaque électrode du capteur de manière à décharger complètement les deux condensateurs comme montré par les diagrammes des tensions $V_{C1}$, $V_{Cm}$ et $V_{C2}$.

Les interrupteurs 14 et 15 sont fermés par des signaux SW 1 à l'état "1" dans la seconde phase notée P2, alors que les interrupteurs 12 et 13 sont ouverts. Dans cette seconde phase P2, la tension $V_{DD}$ est appliquée à l'électrode fixe C1 vue au diagramme de $V_{C1}$, alors que la tension $V_{SS}$ est appliquée à l'électrode fixe C2 vue au diagramme de $V_{C2}$. Si l'électrode mobile s'est déplacée d'une certaine distance en direction de l'une ou l'autre des électrodes fixes, les capacités des condensateurs vont varier inversement. Ceci conduira à une différence de charges accumulées par chaque condensateur, qui dépend également de la tension Vm appliquée précédemment à chaque électrode des condensateurs.

La valeur finale de la tension Vm en sortie de l'intégrateur est obtenue après plusieurs cycles de fonctionnement du circuit électronique en fonction du déplacement de l'électrode mobile entre les deux électrodes fixes comme montré sur le diagramme de la tension $V_{Cm}$. Dans ce cas de figure, l'électrode commune s'est déplacée en direction de l'électrode fixe de la capacité C1, ce qui conduit à obtenir une tension finale de sortie de l'intégrateur, qui se trouve au-dessus de la tension milieu $V_{DD}/2$. Le potentiel de l'électrode commune a été ainsi ajusté de manière à annuler tout écoulement de charges et donc maintenir nulle la charge totale selon le principe de la compensation des charges.

Pour l'opération de transfert de charges accumulées par l'électrode commune Cm, le bloc amplificateur à transfert de charges 4 comprend un amplificateur opérationnel 10, trois condensateurs C3, C4 et C5 et deux interrupteurs 16 et 17. L'entrée inverseuse de cet amplificateur est reliée à l'électrode commune Cm. Le condensateur C3 en parallèle avec l'interrupteur 16 sont connectés entre l'entrée inverseuse et la sortie de l'amplificateur 10. Le condensateur C4 est relié entre la sortie de l'amplificateur 10 et l'entrée du bloc intégrateur 5. Le condensateur C5 est connecté entre l'entrée non-inverseuse et une borne de référence de tension Vref, qui peut être définie comme une masse DC égale à $V_{SS}$ ou $V_{DD}/2$ ou à un autre potentiel. Finalement, l'interrupteur 17 est disposé entre la sortie du bloc intégrateur 5 et l'entrée non-inverseuse de l'amplificateur 10.

Dans le mode de fonctionnement du circuit électronique, les deux interrupteurs 16 et 17 sont fermés par des signaux SW2 à l'état "1" dans la première phase P1 pour d'une part décharger le condensateur C3 et polariser le condensateur C5 avec la tension de sortie Vm à l'entrée non-inverseuse de l'amplificateur. Le niveau de tension Vm du condensateur C5 est maintenu durant la seconde phase P2.

Le bloc intégrateur 5, qui suit le bloc amplificateur à transfert de charges 4, comprend deux interrupteurs d'entrée 18 et 19, un amplificateur opérationnel 11 et un condensateur d'intégration Cf. Ce condensateur Cf est connecté entre l'entrée inverseuse et la sortie de l'amplificateur 11, qui fournit la tension de sortie Vm de l'intégrateur 5. L'interrupteur d'entrée 18 est disposé entre la borne de sortie du condensateur C4 du bloc à transfert de charges 4 et l'entrée non-inverseuse de l'amplificateur 11. Le potentiel de cette entrée non-inverseuse de l'amplificateur 11 est fixé à la référence de tension Vref. L'interrupteur 19 est disposé entre la borne de sortie du condensateur C4 du bloc à transfert de charges 4 et l'entrée inverseuse de l'amplificateur 11.

Dans le mode de fonctionnement du circuit électronique, l'interrupteur 18 est fermé par des signaux SW2 à l'état "1" dans la première phase P1 pour que la tension aux bornes du condensateur C4 du bloc à transfert de charges soit égale à Vm si la tension de référence Vref est à la masse. L'interrupteur 19 est pour sa part fermé par des signaux SW1 à l'état "1" dans la seconde phase P2 pour opérer un écoulement de charges entre la borne de sortie du condensateur C4 du bloc à transfert de charges 4 et l'intégrateur 5. Cet écoulement de charges provenant du bloc amplificateur à transfert de charges 4 est intégré dans le condensateur Cf. Ainsi, la tension de sortie Vm est modifiée d'une quantité proportionnelle à la charge accumulée sur l'électrode mobile commune durant la seconde phase.

Le fonctionnement du circuit électronique décrit ci-dessus est du type asymétrique, car l'électrode fixe de la capacité est toujours polarisée au même potentiel $V_{DD}$ dans chaque seconde phase P2, alors que l'électrode fixe de la capacité C2 est toujours polarisée à $V_{SS}$ dans chaque seconde phase P2. Ce type de circuit électronique intégré rencontre donc les mêmes problèmes de non-linéarités mentionnés ci-dessus relatifs aux capacités parasites et au potentiel de substrat, ce qui est un inconvénient. De plus, comme le circuit électronique est réalisé sous forme de circuit intégré, tout écart de tension lié aux composants électroniques non appariés ne peut être éliminé, ce qui constitue un autre inconvénient.

Le brevet US 5,977,803 décrit un circuit d'interface d'un capteur capacitif qui comprend deux condensateurs montés en différentiel. Ce circuit d'interface est plus compact que le circuit d'interface décrit en référence à la figure 1, car il n'utilise pour la mesure de la différence de valeurs capacitives converties en une tension de sortie de mesure uniquement un amplificateur opérationnel connecté directement au capteur capacitif. A chaque cycle de mesure, les condensateurs du capteur sont déchargés directement par la valeur de tension à la sortie de l'amplificateur opérationnel. Même en modifiant la polarité de tension appliquée à chaque électrode fixe des condensateurs à la fin de plusieurs cycles de mesure, le circuit d'interface ne permet pas de résoudre les problèmes énoncés ci-devant, ce qui constitue un inconvénient.

L'invention a donc pour but principal de fournir un circuit électronique en tant qu'interface d'un capteur capacitif pour la mesure d'un paramètre physique susceptible de fonctionner de manière totalement symétrique afin de pallier les inconvénients cités ci-dessus.

A cet effet, l'invention concerne un circuit électronique d'interface d'un capteur capacitif cité ci-devant, qui comprend les caractéristiques mentionnées dans la revendication 1.

Des formes d'exécution spécifiques du circuit électronique sont définies dans les revendications dépendantes 2 à 5.

Un avantage du circuit électronique réside dans le fait que le circuit électronique est composé d'une double structure avec les deux intégrateurs et les deux blocs d'excitation à fonctionnement alternatif totalement symétrique. Grâce à cela, une compensation d'un écart de tension dû à la technologie ou à la variation de tension d'alimentation peut être minimisé voire supprimé à l'aide des deux signaux de sortie des intégrateurs. Lors du fonctionnement du circuit électronique, chaque cycle ou période de mesure est donc divisé en quatre phases, dont deux phases successives pour chaque intégrateur. De plus, le potentiel du substrat n'a plus une grande importance étant donné que le circuit électronique est conçu avec une double structure identique à fonctionnement totalement symétrique.

Le circuit électronique fournit avantageusement deux fois plus de signaux de sortie chacun sous forme d'une tension que tout circuit électronique de l'état de la technique. Avec la double structure du circuit électronique, il n'est plus nécessaire de garantir une grande précision de la tension au repos au niveau de l'électrode commune. De plus, en opérant une moyenne des deux tensions de sortie fournies par les intégrateurs, cela permet d'améliorer le rapport signal sur bruit du circuit électronique.

A cet effet, l'invention concerne également un procédé de mise en action du circuit électronique de mesure d'un paramètre physique, qui comprend les caractéristiques définies dans la revendication 6.

Des étapes particulières avantageuses du procédé sont définies dans les revendications dépendantes 7 à 9.

Les buts, avantages et caractéristiques du circuit électronique d'interface d'un capteur capacitif pour la mesure d'un paramètre physique, ainsi que du procédé de mise en action dudit circuit électronique apparaîtront mieux dans la description suivante en regard des dessins sur lesquels :

- la figure 1 déjà citée représente de manière simplifiée un circuit électronique d'interface d'un capteur capacitif de l'art antérieur,
- la figure 1 déjà citée représente de manière simplifiée un circuit électronique d'interface d'un capteur capacitif de l'art antérieur,
- la figure 2 déjà citée représente un diagramme temporel de différents signaux de tension durant plusieurs cycles de mesure chacun divisés en deux phases du procédé de mise en action du circuit électronique de la figure 1 selon l'art antérieur,
- la figure 3 représente de manière simplifiée un circuit électronique d'interface d'un capteur capacitif selon l'invention, et
- la figure 4 représente un diagramme temporel de différents signaux de tension durant plusieurs cycles de mesure chacun divisés en quatre phases du procédé de mise en action du circuit électronique de la figure 3 selon l'invention.

Dans la description suivante comme différents composants du circuit électronique d'interface d'un capteur à condensateurs différentiels sont bien connus, ils ne seront pas explicités en détail.

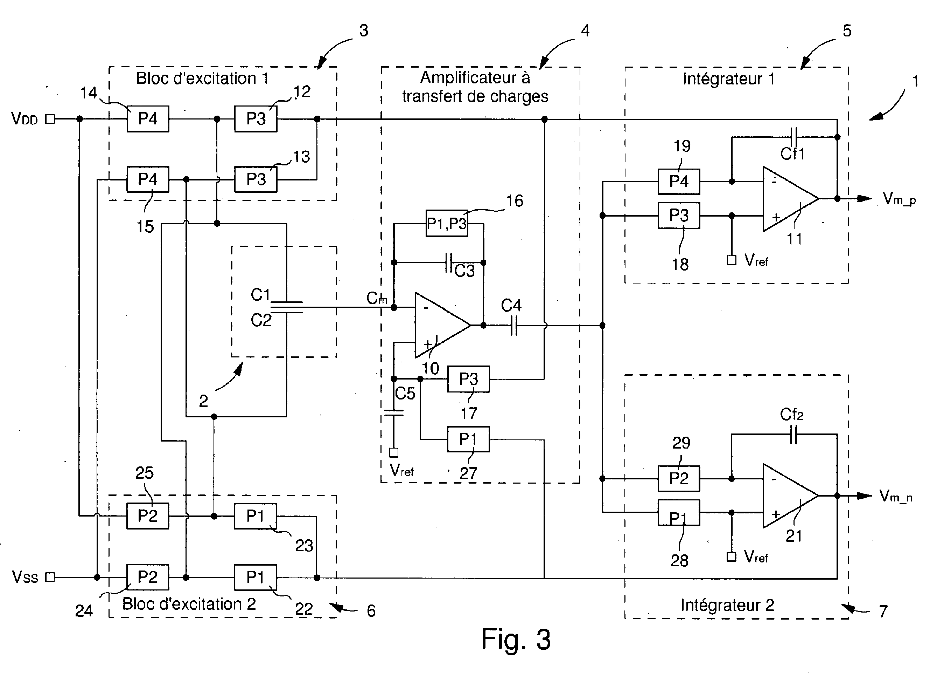

La figure 3 montre un schéma simplifié des différents composants du circuit électronique 1 d'interface d'un capteur capacitif 2 selon l'invention. Ce capteur comprend généralement deux condensateurs montés en différentiel. Une électrode commune Cm des condensateurs est susceptible de se déplacer sous l'action notamment d'une force entre deux électrodes fixes pour définir deux capacités variables C1 et C2. Ceci permet au circuit électronique de fournir des signaux de mesure d'un paramètre physique, tel qu'une accélération, une vitesse angulaire, une pression ou une force par exemple en fonction du déplacement de l'électrode commune mobile.

L'électrode mobile Cm fait partie d'une armature du capteur maintenue élastiquement dans une position centrale au repos entre les deux électrodes fixes. Le circuit électronique 1 peut être alimenté par une source de tension continue non représentée fournissant à une première borne une tension haute $V_{DD}$ et à une seconde borne une tension basse $V_{SS}$. La tension basse peut être définie à 0 V. L'électrode fixe de chaque condensateur peut être polarisée soit à la tension haute $V_{DD}$, soit à la tension basse $V_{SS}$ dans un mode de fonctionnement du circuit électronique. De ce fait, comme les deux condensateurs ont une valeur capacitive égale dans un mode de repos du capteur 2, la tension sur l'électrode commune Cm est égale au repos à une tension intermédiaire $V_{DD}/2$ entre la tension haute $V_{DD}$ et la tension basse $V_{SS}$.

Comme pour la forme d'exécution de l'art antérieur représentée à la figure 1, le circuit électronique 1 comprend un bloc amplificateur à transfert de charges 4, qui est relié en entrée à l'électrode commune Cm, un premier bloc intégrateur 5 et un second bloc intégrateur 7 de structure identique reliés en sortie du bloc amplificateur 4, un premier bloc d'excitation 3 disposé entre la sortie du premier bloc intégrateur 5 et le capteur 2, et un second bloc d'excitation 6 disposé entre la sortie du second bloc intégrateur 7 et le capteur 2. Le premier bloc intégrateur 5 fournit en permanence une tension de sortie Vm_p égale à l'intégrale des charges fournies par le bloc amplificateur 4, alors que le second bloc intégrateur 7 fournit en permanence en sortie une tension Vm_n inverse de la tension Vm_p par rapport à une tension intermédiaire de repos $V_{DD}/2$. Chaque bloc d'excitation 3 et 6 polarise alternativement et cycliquement les électrodes fixes à des niveaux de tension spécifiés comme décrit ci-après.

Le premier bloc d'excitation 3 comprend quatre interrupteurs 12, 13, 14 et 15, qui peuvent être formés par des transistors MOS de commutation dans le circuit intégré. Comme pour le circuit électronique de la figure 1, le premier interrupteur 12 est disposé entre la sortie du premier bloc intégrateur 5 et l'électrode fixe de la capacité C1. Le second interrupteur 13 est disposé entre la sortie du premier bloc intégrateur et l'électrode fixe de la capacité C2. Le troisième interrupteur 14 est disposé entre la borne de tension haute $V_{DD}$ d'une source de tension et l'électrode fixe de la capacité C1. Finalement, le quatrième interrupteur 15 est disposé entre la borne de tension basse $V_{SS}$ de la source de tension et l'électrode fixe de la capacité C2.

Le second bloc d'excitation 6 est d'une structure similaire au premier bloc d'excitation 3. Ce second bloc d'excitation 6 comprend également quatre interrupteurs 22, 23, 24 et 25 formés par des transistors MOS dans le circuit intégré. Le premier interrupteur 22 est disposé entre la sortie du second bloc intégrateur 7 et l'électrode fixe de la capacité C1. Le second interrupteur 23 est disposé entre la sortie du second bloc intégrateur 7 et l'électrode fixe de la capacité C2. Le troisième interrupteur 24 est disposé entre la borne de tension basse $V_{SS}$ et l'électrode fixe de la capacité C1. Finalement, le quatrième interrupteur 25 est disposé entre la borne de tension haute $V_{DD}$ et l'électrode fixe de la capacité C2.

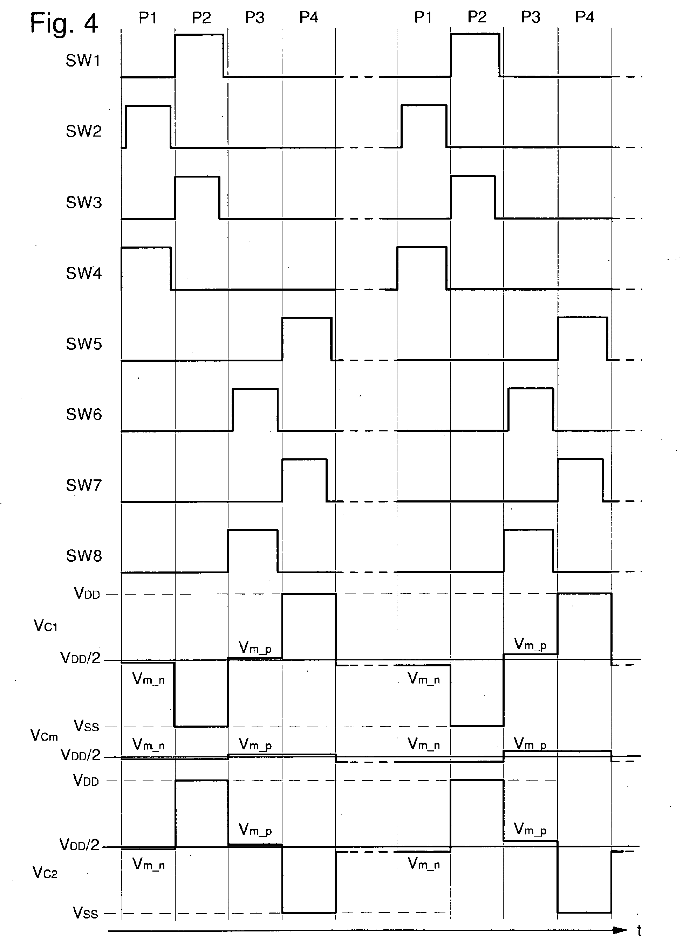

Pour le procédé de mise en action du circuit électronique en mode de fonctionnement, chaque cycle ou période successif de fonctionnement est divisé en quatre phases P1 à P4 comme montré à la figure 4. Le passage d'une phase à l'autre est commandé par des signaux d'horloge non représentés de manière à respectivement ouvrir ou fermer notamment les interrupteurs des premier et second blocs d'excitation 3 et 6. Dans les deux premières phases P1 et P2, le second bloc intégrateur 7, ainsi que le second bloc d'excitation 6 sont en fonction, alors que dans les troisième et quatrième phases P3 et P4, le premier bloc intégrateur 5, ainsi que le premier bloc d'excitation 3 sont en fonction. De ce fait, à chaque demi-période, les premiers bloc intégrateur 5 et bloc d'excitation 3, et les seconds bloc intégrateur 7 et bloc d'excitation 6 sont alternativement enclenchés symétriquement.

Tout d'abord, les interrupteurs 22 et 23 sont fermés par des signaux SW2 à l'état "1" dans la première phase notée P1 aux figures 3 et 4, alors que les interrupteurs 24, 25, 12 à 15 sont ouverts dans cette première phase P1. Dans cette première phase P1, la tension Vm_n présente en sortie du second bloc intégrateur 7 est appliquée à chaque électrode du capteur 2. Ceci permet de décharger complètement les deux condensateurs comme montré par les diagrammes des tensions $V_{C1}$, $V_{Cm}$ et $V_{C2}$.

Les interrupteurs 24 et 25 sont ensuite fermés par des signaux SW1 à l'état "1" dans la seconde phase notée P2, alors que les interrupteurs 22, 23, 12 à 15 sont ouverts. Dans cette seconde phase P2, la tension $V_{SS}$ est appliquée à l'électrode fixe C1 vue au diagramme de $V_{C1}$, alors que la tension $V_{DD}$ est appliquée à l'électrode fixe C2 vue au diagramme de $V_{C2}$. Si l'électrode mobile s'est déplacée d'une certaine distance en direction de l'une ou l'autre des électrodes fixes, les capacités des condensateurs vont varier inversement.

Comme montré à la figure 4, l'électrode mobile Cm s'est déplacée vers l'électrode fixe de la capacité C1. Ceci rend la capacité C1 plus grande que la capacité C2. Ceci conduira à une différence de charges accumulées par chaque condensateur, qui dépend également de la tension Vm_n appliquée précédemment à chaque électrode des condensateurs. La tension de sortie Vm_n du second bloc intégrateur 7 tend vers une tension finale Vm_n qui est dans ce cas au-dessous de la tension intermédiaire $V_{DD}/2$ après plusieurs cycles de mesure.

Dans la troisième phase notée P3, les interrupteurs 12 et 13 du premier bloc d'excitation 3 sont fermés par des signaux SW6 à l'état "1" alors que les interrupteurs 14, 15, 22 à 25 sont ouverts dans cette troisième phase P3. Dans cette troisième phase P3, la tension Vm_p présente en sortie du premier bloc intégrateur 5 est appliquée à chaque électrode du capteur 2. Ceci permet de décharger complètement les deux condensateurs à la tension Vm_p comme montré par les diagrammes des tensions $V_{C1}$, $V_{Cm}$ et $V_{C2}$.

Les interrupteurs 14 et 15 sont ensuite fermés par des signaux SW5 à l'état "1" dans la quatrième phase notée P4, alors que les interrupteurs 12, 13, 22 à 25 sont ouverts. Dans cette quatrième phase P4, la tension $V_{DD}$ est appliquée à l'électrode fixe C1 vue au diagramme de $V_{C1}$, alors que la tension $V_{SS}$ est appliquée à l'électrode fixe C2 vue au diagramme de $V_{C2}$. Comme on peut le remarquer sur ces diagrammes en polarisant alternativement par période de fonctionnement chaque électrode fixe C1 ou C2 une fois à $V_{DD}$ et une fois à $V_{SS}$, le fonctionnement du circuit électronique est ainsi totalement symétrique.

La valeur finale de la tension Vm_p en sortie de premier bloc intégrateur 5, ainsi que la valeur finale de la tension Vm_n en sortie du second bloc intégrateur 7 sont obtenues après plusieurs cycles de fonctionnement du circuit électronique. Initialement, les tensions Vm_p et Vm_n sont égales à la tension intermédiaire $V_{DD}/2$. Ces valeurs de tension sont fonction du déplacement de l'électrode mobile entre les deux électrodes fixes comme montré sur le diagramme de la tension $V_{Cm}$. Dans ce cas de figure, l'électrode commune s'est déplacée en direction de l'électrode fixe de la capacité C1. Ceci conduit à obtenir une tension finale de sortie Vm_p du premier bloc intégrateur 5 au-dessus de la tension milieu $V_{DD}/2$, et une tension finale de sortie Vm_n du second bloc intégrateur 7 au-dessous de $V_{DD}/2$ comme indiqué par les formules suivantes :

$$Vm\_p = V_{DD}/2 + ((C1-C2)/(C1+C2)) \cdot V_{DD}/2$$

$$Vm\_n = V_{DD}/2 - ((C1-C2)/(C1+C2)) \cdot V_{DD}/2$$

Après plusieurs cycles de mesure, par exemple 50 cycles, l'écart de tension finale entre Vm_p et $V_{DD}/2$ et l'écart de tension finale entre Vm_n et $V_{DD}/2$ sont égaux. Ceci permet de traiter deux signaux de mesure dans un circuit de traitement non représenté de manière à compenser les non-linéarités mentionnées ci-dessus.

Pour l'opération de transfert de charges accumulées par l'électrode commune Cm, le bloc amplificateur à transfert de charges 4 comprend un amplificateur opérationnel 10, trois condensateurs C3, C4 et C5 et trois interrupteurs 16, 17 et 27 comme représenté à la figure 3. L'entrée inverseuse de cet amplificateur est reliée à l'électrode commune Cm. Le condensateur C3 en parallèle avec l'interrupteur 16 sont connectés entre l'entrée inverseuse et la sortie de l'amplificateur 10. Le condensateur C4 est relié entre la sortie de l'amplificateur 10 et l'entrée des deux blocs intégrateurs 5 et 7. Le condensateur C5 est connecté entre l'entrée non-inverseuse et une borne de référence de tension Vref, qui peut être définie comme une masse DC égale à $V_{SS}$ ou $V_{DD}/2$ ou à un autre potentiel. Un interrupteur 17 est disposé entre la sortie du premier bloc intégrateur 5 et l'entrée non-inverseuse de l'amplificateur 10. Finalement, un interrupteur 27 est disposé entre la sortie du second bloc intégrateur 7 et l'entrée non-inverseuse de l'amplificateur.

Dans le mode de fonctionnement du circuit électronique décrit selon les figures 3 et 4, les deux interrupteurs 16 et 27 sont fermés par des signaux SW2 à l'état "1" dans la première phase P1. Ceci permet d'une part de décharger le condensateur C3 et polariser le condensateur C5 avec la tension de sortie Vm_n du second bloc intégrateur 7 à l'entrée non-inverseuse de l'amplificateur. Le niveau de tension Vm_n du condensateur C5 est maintenu durant la seconde phase P2 où les interrupteurs 16 et 27 sont ouverts. L'interrupteur 17 reste ouvert dans les phases P1 et P2.

Dans la troisième phase P3, les deux interrupteurs 16 et 17 sont fermés par des signaux SW6 à l'état "1 ". Ceci permet d'une part de décharger à nouveau le condensateur C3 et polariser le condensateur C5 cette fois-ci avec la tension de sortie Vm_p du premier bloc intégrateur 5. Le niveau de tension Vm_p du condensateur C5 est maintenu durant la quatrième phase P4 où les interrupteurs 16 et 17 sont ouverts. L'interrupteur 27 reste ouvert dans les phases P3 et P4.

Le premier bloc intégrateur 5, qui suit le bloc amplificateur à transfert de charges 4, comprend deux interrupteurs d'entrée 18 et 19, un amplificateur opérationnel 11 et un condensateur d'intégration Cf1. Ce condensateur Cf1 est connecté entre l'entrée inverseuse et la sortie de l'amplificateur 11, qui fournit la tension de sortie Vm_p du premier bloc intégrateur 5. L'interrupteur d'entrée 18 est disposé entre la borne de sortie du condensateur C4 du bloc à transfert de charges 4 et l'entrée non-inverseuse de l'amplificateur 11. Le potentiel de cette entrée non-inverseuse de l'amplificateur 11 est fixé à la référence de tension Vref. L'interrupteur 19 est disposé entre la borne de sortie du condensateur C4 du bloc à transfert de charges 4 et l'entrée inverseuse de l'amplificateur 11.

Le second bloc intégrateur 7, qui suit le bloc amplificateur 4, comprend deux interrupteurs d'entrée 28 et 29, un amplificateur opérationnel 21 et un condensateur d'intégration Cf2. Ce condensateur Cf2 est connecté entre l'entrée inverseuse et la sortie de l'amplificateur 21, qui fournit la tension de sortie Vm_n du second bloc intégrateur 7. L'interrupteur d'entrée 28 est disposé entre la borne de sortie du condensateur C4 du bloc à transfert de charges 4 et l'entrée non-inverseuse de l'amplificateur 21. Le potentiel de cette entrée non-inverseuse de l'amplificateur 21 est fixé à la référence de tension Vref. L'interrupteur 29 est disposé entre la borne de sortie du condensateur C4 du bloc à transfert de charges 4 et l'entrée inverseuse de l'amplificateur 21.

Dans le mode de fonctionnement du circuit électronique, l'interrupteur 28 est fermé par des signaux SW4 à l'état "1" dans la première phase P1, alors que l'interrupteur 29 est ouvert. La tension aux bornes du condensateur C4 du bloc à transfert de charges est ainsi égale à Vm_n si la tension de référence Vref est à la masse. L'interrupteur 29 est pour sa part fermé par des signaux SW3 à l'état "1" dans la seconde phase P2, alors que l'interrupteur 28 est ouvert. Ceci permet d'opérer un écoulement de charges entre la borne de sortie du condensateur C4 du bloc à transfert de charges 4 et le second bloc intégrateur 7. Cet écoulement de charges provenant du bloc amplificateur à transfert de charges 4 est intégré dans le condensateur Cf2. Ainsi, la tension de sortie Vm_n est modifiée d'une quantité proportionnelle à la charge accumulée sur l'électrode mobile commune durant la seconde phase.

Il est à noter que les signaux SW1 sont d'une durée à l'état "1" légèrement supérieure aux signaux SW3. Il en est de même pour les signaux SW4 par rapport aux signaux SW2 de manière à fermer ou ouvrir certains interrupteurs avant d'autres interrupteurs dans chaque phase P1 et P2.

Pour les troisième et quatrième phases P3 et P4 de chaque cycle de fonctionnement, le premier bloc intégrateur 5 est utilisé, alors que le second bloc intégrateur est laissé au repos. L'interrupteur 18 est donc fermé par des signaux SW8 à l'état "1" dans la troisième phase P3, alors que l'interrupteur 19 est ouvert. La tension aux bornes du condensateur C4 est ainsi égale à Vm_p. L'interrupteur 19 est pour sa part fermé par des signaux SW7 à l'état "1" dans la quatrième phase P4, alors que l'interrupteur 18 est ouvert. Ceci permet d'opérer un écoulement de charges entre la borne de sortie du condensateur C4 et le premier bloc intégrateur 5. Cet écoulement de charges provenant du bloc amplificateur 4 est intégré dans le condensateur Cf1. Ainsi, la tension de sortie Vm_p est modifiée d'une quantité proportionnelle à la charge accumulée sur l'électrode mobile commune durant la quatrième phase.

Il est à noter que les signaux SW5 sont d'une durée à l'état "1" légèrement supérieure aux signaux SW7. Il en est de même pour les signaux SW8 par rapport aux signaux SW6 de manière à fermer ou ouvrir certains interrupteurs avant d'autres interrupteurs dans chaque phase P3 et P4.

Comme mentionné précédemment à la fin des cycles de mesure, les écarts de tension entre la tension de sortie Vm_p et Vm_n des premier et second blocs intégrateurs 5 et 7, et la tension intermédiaire $V_{DD}/2$ sont sensiblement égaux. Le circuit de traitement relié au circuit électronique d'interface du capteur est donc en mesure de traiter deux fois plus de signaux que dans l'art antérieur. De plus, en combinant ou soustrayant chaque signal de tension de sortie, tout écart de tension lié à la technologie ou à une variation de tension d'alimentation peut être compensé. De plus, les non-linéarités dues au potentiel de substrat et aux capacités parasites sont également atténuées par la structure dudit circuit électronique et son fonctionnement totalement symétrique.

Pour donner un ordre de grandeur non limitatif quant à la portée de l'invention, la capacité C1 ou C2 de chaque condensateur est de l'ordre de 450 fF au repos. La capacité du condensateur C3 peut être de l'ordre de 600 fF. La capacité du condensateur C4 peut être de l'ordre de 1 pF. La capacité du condensateur C5 peut être de l'ordre de 1.8 pF. Finalement, la capacité des condensateurs Cf1 et Cf2 peut être de l'ordre de 5 pF. Chaque phase de chaque cycle est approximativement de l'ordre de 6 $\mu$s, ce qui donne une tension finale de mesure après environ 1 ms. De plus, le capteur peut être configuré de telle manière que le circuit électronique 1 fournisse un écart de tension entre la tension de sortie Vm_p et la tension intermédiaire $V_{DD}/2$ de 20 mV pour 1 g d'accélération par exemple.

Pour effectuer un contrôle du bon fonctionnement du circuit électronique non illustré, il peut être envisagé avant d'effectuer une mesure d'un paramètre physique, de générer volontairement une force électrostatique. Il peut être ainsi prévu de modifier l'agencement des phases de certains cycles pour émuler une accélération indépendamment de tout déplacement de l'électrode mobile du capteur. Pour ce faire, il peut être envisagé une fois chaque deux cycles de ne pas polariser l'électrode fixe C2 à la tension basse $V_{SS}$ dans la phase P4 pour la maintenir à la tension Vm_p par exemple. Cette tension Vm_p peut être égale à $V_{DD}/2$ comme ce contrôle est effectué avant la mesure du paramètre physique ou au début de toute mesure. En supprimant volontairement la symétrie des signaux de tension de polarisation appliqués sur les condensateurs, une telle mesure du bon fonctionnement peut donc être effectué.

A partir de la description qui vient d'être faite, de multiples variantes de réalisation du circuit électronique d'interface du capteur capacitif peuvent être conçues par l'homme du métier sans sortir du cadre de l'invention définie par les revendications. Il peut être envisagé de modifier la durée de chaque phase l'une par rapport à l'autre ou de modifier la durée de chaque cycle durant les opérations de mesure du paramètre physique. Il peut être prévu de placer un ou plusieurs autres blocs intégrateurs en parallèle des premier et/ou second blocs intégrateurs, ainsi qu'un ou plusieurs blocs d'excitation en parallèle des premier et/ou second blocs d'excitation par mesure de sécurité.

**Revendications**

1.  Circuit électronique (1) d'interface d'un capteur capacitif (2) pour la mesure d'un paramètre physique, tel qu'une accélération, une vitesse angulaire, une force ou une pression, le capteur comprenant au moins deux condensateurs (C1, C2) montés en différentiel dont une électrode commune (Cm) est susceptible de se déplacer par rapport à chaque électrode fixe des deux condensateurs pour modifier la valeur capacitive de chaque condensateur lors de la mesure du paramètre physique, ledit circuit électronique comprenant :

    - un bloc amplificateur à transfert de charges (4) connecté à l'électrode commune (Cm),
    - un premier bloc intégrateur (5) pour intégrer les charges fournies par le bloc amplificateur à transfert de charges, et
    - un premier bloc d'excitation (3) disposé entre la sortie du premier bloc intégrateur et le capteur pour polariser chaque électrode fixe des condensateurs à une valeur de tension déterminée, ou pour décharger chaque condensateur par une tension de sortie du premier bloc intégrateur,

    **caractérisé en ce que** le circuit électronique comprend :

    - un second bloc intégrateur (7) pour intégrer les charges fournies par l'amplificateur à transfert de charges, les premier et second blocs intégrateurs étant arrangés pour fonctionner alternativement et cycliquement par période de mesure,

EP 1 835 263 B1

- un second bloc d'excitation (6) disposé entre la sortie du second bloc intégrateur et le capteur pour polariser chaque électrode fixe des condensateurs à une valeur de tension déterminée inverse de la valeur de tension commandée par le premier bloc d'excitation, ou pour décharger chaque condensateur par une tension de sortie du second bloc intégrateur, les premier et second blocs d'excitation étant arrangés pour fonctionner alternativement et cycliquement par période de mesure chacun avec leur bloc intégrateur respectif afin que le circuit électronique fonctionne de manière entièrement symétrique pour la mesure du paramètre physique.

2. Circuit électronique selon la revendication 1, **caractérisé en ce que** la structure du premier bloc intégrateur (5) est équivalente à la structure du second bloc intégrateur (7).

3. Circuit électronique selon la revendication 2, **caractérisé en ce que** chaque bloc intégrateur (5, 7) comprend un amplificateur opérationnel (11, 21), un condensateur d'intégration (Cf1, Cf2) connecté entre une entrée inverseuse de l'amplificateur et la sortie de l'amplificateur, un premier interrupteur (19, 29) connecté entre la sortie du bloc amplificateur à transfert de charges et l'entrée inverseuse de l'amplificateur, et un second interrupteur (18, 28) connecté entre la sortie du bloc amplificateur à transfert de charges et l'entrée non-inverseuse de l'amplificateur, qui est destinée à être polarisée à une tension de référence (Vref), dans un mode de fonctionnement du circuit électronique, chaque interrupteur de chaque bloc intégrateur en fonction étant commandé pour être dans un état fermé pour l'un des interrupteurs quand l'autre interrupteur est dans un état ouvert par période de mesure.

4. Circuit électronique selon l'une des revendications précédentes, **caractérisé en ce que** la structure du premier bloc d'excitation (3) est équivalente à la structure du second bloc d'excitation (6), chaque bloc d'excitation étant relié à une borne de tension haute ($V_{DD}$) et une borne de tension basse ($V_{SS}$) d'une source de tension continue.

5. Circuit électronique selon la revendication 4, **caractérisé en ce que** le premier bloc d'excitation (3) comprend quatre interrupteurs (12 à 15), le premier interrupteur (12) étant connecté entre la sortie (Vm_p) du premier bloc intégrateur (5) et l'électrode fixe du premier condensateur (C1), le second interrupteur (13) étant connecté entre la sortie du premier bloc intégrateur et l'électrode fixe du second condensateur (C2), le troisième interrupteur (14) étant connecté entre la borne de tension haute ($V_{DD}$) et l'électrode fixe du premier condensateur, et le quatrième interrupteur (15) étant connecté entre la borne de tension basse ($V_{SS}$) et l'électrode fixe du second condensateur, dans un mode de fonctionnement du circuit électronique, les premier et second interrupteurs étant dans un état fermé quand les troisième et quatrième interrupteurs sont dans un état ouvert et inversement par période de mesure, et **en ce que** le second bloc d'excitation (6) comprend quatre interrupteurs (22 à 25), le premier interrupteur (22) étant connecté entre la sortie (Vm_n) du second bloc intégrateur (7) et l'électrode fixe du premier condensateur (C1), le second interrupteur (23) étant connecté entre la sortie du second bloc intégrateur et l'électrode fixe du second condensateur (C2), le troisième interrupteur (24) étant connecté entre la borne de tension basse ($V_{SS}$) et l'électrode fixe du premier condensateur, et le quatrième interrupteur (25) étant connecté entre la borne de tension haute ($V_{DD}$) et l'électrode fixe du second condensateur, dans un mode de fonctionnement du circuit électronique, les premier et second interrupteurs étant dans un état fermé quand les troisième et quatrième interrupteurs sont dans un état ouvert et inversement par période de mesure.

6. Procédé de mise en action du circuit électronique selon l'une des revendications précédentes, **caractérisé en ce que** dans un mode de fonctionnement du circuit électronique pour la mesure d'un paramètre physique, le procédé comprend quatre phases pour chaque cycle successif de mesure consistant :

   - dans une première phase (P1) à mettre en fonction le second bloc intégrateur (7) avec le second bloc d'excitation (6) et au repos le premier bloc intégrateur (5) avec le premier bloc d'excitation (3), afin de polariser chaque électrode fixe des condensateurs (C1, C2) à une tension de sortie (Vm_n) du second bloc intégrateur (7),
   - dans une seconde phase (P2) où le second bloc intégrateur et le second bloc d'excitation sont en fonction, à polariser l'électrode fixe du premier condensateur (C1) à une tension basse ($V_{SS}$) d'une source de tension d'alimentation du circuit électronique, et l'électrode fixe du second condensateur (C2) à une tension haute ($V_{DD}$) de la source de tension,
   - dans une troisième phase (P3) à mettre en fonction le premier bloc intégrateur (5) avec le premier bloc d'excitation (3) et au repos le second bloc intégrateur (7) avec le second bloc d'excitation (6), afin de polariser chaque électrode fixe des condensateurs (C1, C2) à une tension de sortie (Vm_p) du premier bloc intégrateur (5), et
   - dans une quatrième phase (P4) où le premier bloc intégrateur et le premier bloc d'excitation sont en fonction, à polariser l'électrode fixe du premier condensateur (C1) à une tension haute ($V_{DD}$), et l'électrode fixe du second condensateur (C2) à une tension basse ($V_{SS}$).

**7.** Procédé selon la revendication 6, **caractérisé en ce que** plusieurs cycles de mesure successifs sont effectués pour que chaque bloc intégrateur (5, 7) fournisse une tension de sortie finale (Vm_p, Vm_n), où une des tensions de sortie finale (Vm_p) est au-dessus d'une tension intermédiaire de repos du capteur, alors que l'autre tension de sortie finale est au-dessous de ladite tension intermédiaire, l'écart de tension entre chaque tension de sortie finale et la tension intermédiaire étant représentatif du paramètre physique mesuré.

**8.** Procédé selon la revendication 6, **caractérisé en ce que** dans un mode de contrôle du fonctionnement du circuit électronique avant ou pendant la mesure d'un paramètre physique, une force électrostatique est émulée volontairement en ne polarisant pas l'une ou l'autre électrode fixe des condensateurs (C1, C2) à la tension haute ($V_{DD}$) ou à à tension basse ($V_{SS}$) pendant la deuxième ou quatrième phase d'un cycle normal de mesure.

**9.** Procédé selon la revendication 8, **caractérisé en ce que** l'électrode fixe du second condensateur (C2) n'est pas polarisée à la tension basse (Vss) pendant la quatrième phase (P4) tous les deux cycles de mesure.

**Claims**

**1.** Electronic interface circuit (1) for a capacitive sensor (2) for measuring a physical parameter, such as an acceleration, an angular velocity, force or pressure, the sensor including at least two differential mounted capacitors (C1, C2) whose a common electrode (Cm) is able to move relative to each fixed electrode of the two capacitors in order to alter the capacitive value of each capacitor when the physical parameter is measured, said electronic circuit including:

- a charge transfer amplifier unit (4) connected to the common electrode (Cm),
- a first integrator unit (5) for integrating the charges supplied by the charge transfer amplifier unit, and
- a first excitation unit (3) arranged between the output of the first integrator unit and the sensor for polarizing each fixed electrode of the capacitors at a determined voltage value, or for discharging each capacitor by an output voltage of the first integrator unit,

**characterized in that** the electronic circuit includes:

- a second integrator unit (7) for integrating the charges supplied by the charge transfer amplifier, the first and second integrator units being arranged to operate alternately and cyclically each measurement period, and
- a second excitation unit (6) arranged between the output of the second integrator unit and the sensor for polarizing each fixed electrode of the capacitors at a determined voltage value opposite to the voltage value controlled by the first excitation unit, or for discharging each capacitor by an output voltage of the second integrator unit, the first and second excitation units being arranged to operate alternately and cyclically each measurement period each with its respective integrator unit so that the electronic circuit operates entirely symmetrically for the physical parameter measurement.

**2.** Electronic circuit according to claim 1, **characterized in that** the structure of the first integrator unit (5) is equivalent to the structure of the second integrator unit (7).

**3.** Electronic circuit according to claim 2, **characterized in that** each integrator unit (5, 7) includes an operational amplifier (11, 21), an integration capacitor (Cf1, Cf2) connected between an inverter input of the amplifier and the amplifier output, a first switch (19, 29) connected between the output of the charge transfer amplifier unit and the inverter input of the amplifier, and a second switch (18, 28) connected between the output of the charge transfer amplifier unit and the non-inverter input of the amplifier, which is intended to be polarized at a reference voltage (Vref), in an electronic circuit operating mode, each switch of each operating integrator unit being controlled to be in a closed state for one of the switches when the other switch is in an open state in each measurement period.

**4.** Electronic circuit according to any one of the preceding claims, **characterized in that** the structure of the first excitation unit (3) is equivalent to the structure of the second excitation unit (6), each excitation unit being connected to a high voltage terminal ($V_{DD}$) and a low voltage terminal ($V_{SS}$) of a continuous voltage source.

**5.** Electronic circuit according to claim 4, **characterized in that** the first excitation unit (3) includes four switches (12 to 15), the first switch (12) being connected between the output (Vm_p) of the first integrator unit (5) and the fixed electrode of the first capacitor (C1), the second switch (13) being connected between the output of the first integrator unit and the fixed electrode of the second capacitor (C2), the third switch (14) being connected between the high voltage terminal ($V_{DD}$) and the fixed electrode of the first capacitor, and the fourth switch (15) being connected between the low voltage terminal ($V_{SS}$) and the fixed electrode of the second capacitor, in one operating mode of the electronic circuit, the first and second switches being in a closed state when the third and fourth switches are in an open state and vice versa in each measurement period, and **in that** the second excitation unit (6) includes four switches (22 to 25), the first switch (22) being connected between the output ($Vm\_n$) of the second integrator unit (7) and the fixed electrode of the first capacitor (C1), the second switch (23) being connected between the output of the second integrator unit and the fixed electrode of the second capacitor (C2), the third switch (24) being connected between the low voltage terminal ($V_{SS}$) and the fixed electrode of the first capacitor, and the fourth switch (25) being connected between the high voltage terminal ($V_{DD}$) and the fixed electrode of the second capacitor, in one operating mode of the electronic circuit, the first and second switches being in a closed state when the third and fourth switches are in an open state and vice versa each measurement period.

6. Method for activating the electronic circuit according to any of the preceding claims, **characterized in that** in an operating mode of the electronic circuit for measuring a physical parameter, the method includes four phases for each successive measurement cycle, consisting:

- in a first phase (P1) of switching on the second integrator unit (7) with the second excitation unit (6) and switching off the first integrator unit (5) with the first excitation unit (3), in order to polarize each fixed electrode of the capacitors (C1, C2) at an output voltage ($Vm\_n$) of the second integrator unit (7),
- in a second phase (P2) in which the second integrator unit and the second excitation unit are operating, of polarizing the fixed electrode of the first capacitor (C1) at a low voltage ($V_{SS}$) of a supply voltage source of the electronic circuit, and the fixed electrode of the second capacitor (C2) at a high voltage ($V_{DD}$) of the voltage source,
- in a third phase (P3) of switching on the first integrator unit (5) with the first excitation unit (3) and switching off the second integrator unit (7) with the second excitation unit (6), in order to polarize each fixed electrode of the capacitors (C1, C2) at an output voltage ($Vm\_p$) of the first integrator unit (5), and
- in a fourth phase (P4) where the first integrator unit and the first excitation unit are operative, of polarizing the fixed electrode of the first capacitor (C1) at a high voltage ($V_{DD}$), and the fixed electrode of the second capacitor (C2) at a low voltage (Vss).

7. Method according to claim 6, **characterized in that** several successive measurement cycles are carried out so that each integrator unit (5, 7) provides a final output voltage ($Vm\_p$, $Vm\_n$), where one of the final output voltages ($Vm\_p$) is above an intermediate rest voltage ($V_{DD}/2$) of the sensor, whereas the other final output voltage is below said intermediate voltage, the voltage deviation between each final output voltage and the intermediate voltage being representative of the measured physical parameter.

8. Method according to claim 6, **characterized in that** in an operating checking mode of the electronic circuit before or during the measurement of a physical parameter, an electrostatic force is deliberately emulated by not polarizing one or other of the fixed electrodes of the capacitors (C1, C2) at the high voltage ($V_{DD}$) or the low voltage ($V_{SS}$) during the second or fourth phase of a normal measurement cycle.

9. Method according to claim 8, **characterized in that** the fixed electrode of the second capacitor (C2) is not polarized at the low voltage ($V_{SS}$) during the fourth phase (P4) every two measurement cycles.

**Patentansprüche**

1. Elektronische Schnittstellenschaltung (1) eines kapazitiven Sensors (2) für die Messung eines physikalischen Parameters wie etwa einer Beschleunigung, einer Winkelgeschwindigkeit, einer Kraft oder eines Drucks, wobei der Sensor wenigstens zwei differentiell geschaltete Kondensatoren (C1, C2) enthält, wovon sich eine gemeinsame Elektrode (Cm) in Bezug auf jede feste Elektrode der zwei Kondensatoren verlagern kann, um den Kapazitätswert jedes Kondensators bei der Messung des physikalischen Parameters zu modifizieren, wobei die elektronische Schaltung umfasst:

- einen Verstärkerblock (4) mit Ladungsübertragung, der mit der gemeinsamen Elektrode (Cm) verbunden ist,
- einen ersten Integratorblock (5), um die von dem Verstärkerblock mit Ladungsübertragung gelieferten Ladungen zu integrieren und
- einen ersten Erregungsblock (3), der zwischen dem Ausgang des ersten Integratorblocks und dem Sensor angeordnet ist, um jede feste Elektrode der Kondensatoren auf einen bestimmten Spannungswert vorzuspannen oder um jeden Kondensator durch eine Ausgangsspannung des ersten Integratorblocks zu entladen,

**dadurch gekennzeichnet, dass** die elektronische Schaltung umfasst:

- einen zweiten Integratorblock (7), um die vom Verstärker mit Ladungsübertragung gelieferten Ladungen zu integrieren, wobei der erste und der zweite Integratorblock dazu ausgelegt sind, pro Messperiode alternativ und zyklisch zu arbeiten,
- einen zweiten Erregungsblock (6), der zwischen dem Ausgang des zweiten Integratorblocks und dem Sensor angeordnet ist, um jede feste Elektrode der Kondensatoren auf einen bestimmten Spannungswert, der zu dem durch den ersten Erregungsblock befohlenen Spannungswert invers ist, vorzuspannen oder um jeden Kondensator durch eine Ausgangsspannung des zweiten Integratorblocks zu entladen, wobei der erste und der zweite Erregungsblock dazu ausgelegt sind, alternativ und zyklisch pro Messperiode, jeder mit seinem jeweiligen Integratorblock, zu arbeiten, damit die elektronische Schaltung für die Messung des physikalischen Parameters vollständig symmetrisch arbeitet.

2. Elektronische Schaltung nach Anspruch 1, **dadurch gekennzeichnet, dass** die Struktur des ersten Integratorblocks (5) zu der Struktur des zweiten Integratorblocks (7) äquivalent ist.

3. Elektronische Schaltung nach Anspruch 2, **dadurch gekennzeichnet, dass** jeder Integratorblock (5, 7) einen Operationsverstärker (11, 21), einen Integrationskondensator (Cf1, Cf2), der zwischen einen invertierenden Eingang des Verstärkers und den Ausgang des Verstärkers geschaltet ist, einen ersten Unterbrecher (19, 29), der zwischen den Ausgang des Verstärkerblocks mit Ladungsübertragung und den invertierenden Eingang des Verstärkers geschaltet ist, und einen zweiten Unterbrecher (18, 28), der zwischen den Ausgang des Verstärkerblocks mit Ladungsübertragung und den nicht invertierenden Eingang des Verstärkers geschaltet ist und dazu bestimmt ist, in einer Funktionsbetriebsart der elektronischen Schaltung auf eine Referenzspannung (Vref) vorgespannt zu werden, umfasst, wobei jeder Unterbrecher jedes in Betrieb befindlichen Integratorblocks so gesteuert wird, dass er pro Messperiode für einen der Unterbrecher in einem geschlossenen Zustand ist, wenn der andere Unterbrecher in einem geöffneten Zustand ist.

4. Elektronische Schaltung nach einem der vorhergehenden Ansprüche, **dadurch gekennzeichnet, dass** die Struktur des ersten Erregungsblocks (3) zu der Struktur des zweiten Erregungsblocks (6) äquivalent ist, wobei jeder Erregungsblock mit einem Anschluss ($V_{DD}$) mit hoher Spannung und mit einem Anschluss ($V_{SS}$) mit niedriger Spannung einer Gleichspannungsquelle verbunden ist.

5. Elektronische Schaltung nach Anspruch 4, **dadurch gekennzeichnet, dass** der erste Erregungsblock (3) vier Unterbrecher (12 bis 15) umfasst, wobei in einer Funktionsbetriebsart der elektronischen Schaltung der erste Unterbrecher (12) zwischen den Ausgang ($V_{m\_p}$) des ersten Integratorblocks (5) und die feste Elektrode des ersten Kondensators (C1) geschaltet ist, der zweite Unterbrecher (13) zwischen den Ausgang des ersten Integratorblocks und die feste Elektrode des zweiten Kondensators (C2) geschaltet ist, der dritte Unterbrecher (14) zwischen den Anschluss ($V_{DD}$) mit hoher Spannung und die feste Elektrode des ersten Kondensators geschaltet ist und der vierte Unterbrecher (15) zwischen den Anschluss ($V_{SS}$) mit niedriger Spannung und die feste Elektrode des zweiten Kondensators geschaltet ist, wobei pro Messperiode der erste und der zweite Unterbrecher in einem geschlossenen Zustand sind, wenn der dritte und der vierte Unterbrecher in einem geöffnete Zustand sind und umgekehrt, und dass der zweite Erregungsblock (6) vier Unterbrecher (22 bis 25) umfasst, wobei in einer Funktionsbetriebsart der elektronischen Schaltung der erste Unterbrecher (22) zwischen den Ausgang (Vm_n) des zweiten Integratorblocks (7) und die feste Elektrode des ersten Kondensators (C1) geschaltet ist, der zweite Unterbrecher (23) zwischen den Ausgang des zweiten Integratorblocks und die feste Elektrode des zweiten Kondensators (C2) geschaltet ist, der dritte Unterbrecher (24) zwischen den Anschluss ($V_{SS}$) mit niedriger Spannung und die feste Elektrode des ersten Kondensators geschaltet ist und der vierte Unterbrecher (25) zwischen den Anschluss ($V_{DD}$) mit hoher Spannung und die feste Elektrode des zweiten Kondensators geschaltet ist, wobei pro Messperiode der erste und der zweite Unterbrecher in einem geschlossenen Zustand sind, wenn der dritte und der vierte Unterbrecher in einem geöffneten Zustand sind, und umgekehrt.

6. Verfahren zum Betreiben der elektronischen Schaltung nach einem der vorhergehenden Ansprüche, **dadurch gekennzeichnet, dass** in einer Funktionsbetriebsart der elektronischen Schaltung für die Messung eines physikalischen Parameters das Verfahren für jeden aufeinander folgenden Messzyklus vier Phasen umfasst, die darin bestehen:

- in einer ersten Phase (P1) den zweiten Integratorblock (7) mit dem zweiten Erregungsblock (6) in Betrieb zu setzen und den ersten Integratorblock (5) mit dem ersten Erregungsblock (3) auszuschalten, um jede feste Elektrode der Kondensatoren (C1, C2) auf eine Ausgangsspannung (Vm_n) des zweiten Integratorblocks (7) vorzuspannen,

- in einer zweiten Phase (P2), in der der zweite Integratorblock und der zweite Erregungsblock in Betrieb sind, die feste Elektrode des ersten Kondensators (C1) auf eine niedrige Spannung ($V_{SS}$) einer Versorgungsspannungsquelle der elektronischen Schaltung vorzuspannen und die feste Elektrode des zweiten Kondensators (C2) auf eine hohe Spannung ($V_{DD}$) der Spannungsquelle vorzuspannen,

- in einer dritten Phase (P3) den ersten Integratorblock (5) mit dem ersten Erregungsblock (3) zu betätigen und den zweiten Integratorblock (7) mit dem zweiten Erregungsblock (6) auszuschalten, um jede feste Elektrode der Kondensatoren (C1, C2) auf eine Ausgangsspannung (Vm_p) des ersten Integratorblocks (5) vorzuspannen, und

- in einer vierten Phase (P4), in der der erste Integratorblock und der erste Erregungsblock in Betrieb sind, die feste Elektrode des ersten Kondensators (C1) auf eine hohe Spannung ($V_{DD}$) vorzuspannen und die feste Elektrode des zweiten Kondensators (C2) auf eine niedrige Spannung ($V_{SS}$) vorzuspannen.

7. Verfahren nach Anspruch 6, **dadurch gekennzeichnet, dass** mehrere aufeinander folgende Messzyklen ausgeführt werden, damit jeder Integratorblock (5, 7) eine endgültige Ausgangsspannung (Vm_p, Vm_n) liefert, wobei eine der endgültigen Ausgangsspannungen (Vm_p) über einer Ruhe-Zwischenspannung des Sensors liegt, während die andere endgültige Ausgangsspannung unter der Zwischenspannung liegt, wobei der Spannungsabstand zwischen jeder endgültigen Ausgangsspannung und der Zwischenspannung für den gemessenen physikalischen Parameter repräsentativ ist.

8. Verfahren nach Anspruch 6, **dadurch gekennzeichnet, dass** in einer Kontrollfunktionsbetriebsart für die Steuerung des Betriebs der elektronischen Schaltung vor oder während der Messung eines physikalischen Parameters eine elektrostatische Kraft beliebig emuliert wird, indem während der zweiten oder der vierten Phase eines normalen Messzyklus weder die eine noch die andere feste Elektrode der Kondensatoren (C1, C2) auf die hohe Spannung ($V_{DD}$) oder auf die niedrige Spannung ($V_{SS}$) vorgespannt wird.

9. Verfahren nach Anspruch 8, **dadurch gekennzeichnet, dass** die feste Elektrode des zweiten Kondensators (C2) während der vierten Phase (P4) in jedem zweiten der Messzyklen nicht auf die niedrige Spannung ($V_{SS}$) vorgespannt wird.

Fig. 1

EP 1 835 263 B1

Fig. 2

Fig. 3

EP 1 835 263 B1

# Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2720510

- US 5977803 A

**Littérature non-brevet citée dans la description**

- **MM. H. LEUTOLD ; F. RUDOLPH.** *Sensors and actuators,* 1990, vol. A21-A23, 278-281